# NEUE EUROPÄISCHE PATENTSCHRIFT

(11) **EP 1 363 766 B2**
(45) Veröffentlichungstag und Bekanntmachung des Hinweises auf die Entscheidung über den Einspruch: **12.02.2014**
(45) Hinweis auf die Patenterteilung: 26.09.2007
(21) Anmeldenummer: 01967625.3
(22) Anmeldetag: 25.07.2001
(51) Int. Cl.: B29D 24/00

(54) **VERFAHREN UND VORRICHTUNG ZUR HERSTELLUNG EINES DOPPELWANDIGEN THERMOPLASTISCHEN ROHRES MIT EINER ROHRMUFFE**
METHOD AND DEVICE FOR PRODUCING A DOUBLE-WALLED THERMOPLASTIC PIPE WITH INTEGRAL PIPE BELL
DISPOSITIF ET PROCEDE DE FABRICATION D'UN TUBE THERMOPLASTIQUE A DOUBLE PAROI AU MOYEN D'UN MANCHON DE TUYAU

(30) Priorität: 02.03.2001 DE 10110064
(43) Veröffentlichungstag der Anmeldung: 26.11.2003
(73) Patentinhaber: Lupke, Manfred Arno Alfred, Thornhill Ontario L3T 1W6 (CA); Lupke, Stefan A., Thornhill, Ontario L3T 1X6 (CA)
(72) Erfinder: Lupke, Manfred Arno Alfred, Thornhill Ontario L3T 1W6 (CA); Lupke, Stefan A., Thornhill, Ontario L3T 1X6 (CA)
(74) Vertreter: Thum, Bernhard
(86) Internationale Anmeldenummer: PCT/IB2001/001781
(87) Internationale Veröffentlichungsnummer: WO 2002/070238

(56) Entgegenhaltungen:
- EP-A- 0 995 579
- EP-A2- 0 563 575
- EP-A2- 0 890 770
- FR-A- 2 718 509
- US-A- 5 296 188
- US-A- 5 405 569
- US-A- 5 891 383

## Beschreibung

Die Erfindung betrifft ein Verfahren und eine Vorrichtung zur Herstellung eines doppelwandigen thermoplastischen Rohres mit einer Rohrmuffe.

Ein derartiges Verfahren ist zum Beispiel aus der EP 0 563 575 A2 bekannt. Dabei wird ein erster Schlauch in einen Formtunnel extrudiert, der aus mindestens einer Reihe auf einer Bahn geführter Kokillen gebildet wird. Der erste Schlauch wird in mindestens einem ersten Abschnitt in eine gewellte Form gebracht und in mindestens einem zweiten Abschnitt zu einer Rohrmuffe aufgeweitet. Ein zweiter Schlauch wird in den ersten Schlauch extrudiert und gegen die Wellentäler des ersten Schlauchs gedrückt, so dass ein Verbundrohr aus einem Außen-Schlauch und einem mit diesem verschweißten Innen-Schlauch gebildet wird. Während der erste Schlauch in die gewellte Form gebracht und der zweite Schlauch in den ersten extrudiert wird, wird der Raum zwischen den beiden Schläuchen mit einem über Atmosphärendruck liegenden Druck p1 beaufschlagt. Der Druck p1 ist so bemessen, dass nach dem Abkühlen der an den Wellentälern miteinander verschweißten Schläuchen der Innenschlauch zwischen diesen Stellen nicht nach innen oder nach außen gewölbt ist. Nach dem Abkühlen der Schläuche soll sich exakt Atmosphärendruck einstellen.
Das Einbringen des ersten Schlauchs in die gewellte Form geschieht durch Aufbringen eines unter Atmosphärendruck liegenden Drucks von außen. Der Druck p1 unterstützt die wellenförmige Ausbildung des ersten Schlauchs, ist aber in der Regel nur relativ gering über Atmosphärendruck eingestellt, um - wie vorstehend beschrieben - eine Auswölbung des Innenschlauchs beim Abkühlen der Schläuche zu vermeiden.

Gemäß EP 0 563 575 A2 wird der erste Schlauch in den zweiten Abschnitten unter Aufbringung eines Teil-Vakuums von außen zu einer Rohrmuffe aufgeweitet. Nach dem Aufweiten des ersten Schlauches zu der Rohrmuffe wird der Raum zwischen den beiden Schläuchen auf Atmosphärendruck entlüftet.

Während des Extrudierens des zweiten Schlauchs in den zur Rohrmuffe aufgeweiteten ersten Schlauch wird der zweite Schlauch von innen mit einem Druck p3 über Atmosphärendruck beaufschlagt und gegen den ersten Schlauch gedrückt. Dadurch wird sichergestellt, dass eine vollflächige Verschweißung der beiden Schläuche im Bereich der Rohrmuffe erzielt wird.

Nachdem die Rohrmuffe durch beide Schläuche geformt wurde und der zweite Schlauch wieder gegen die Wellentäler des ersten Schlauchs in einem weiteren ersten Abschnitt desselben extrudiert wird, wird der Raum zwischen den beiden Schläuchen wieder mit dem Druck p1 beaufschlagt.

Das Aufbringen des Teil-Vakuums von außen auf den ersten Schlauch zur Ausbildung einer Rohrmuffe gemäß der EP 0 563 575 A2 ist insofern schwierig, als der Raum zwischen dem ersten Schlauch und dem betreffenden Abschnitt des Formtunnels gegen das Eindringen von Außenluft gut abgedichtet sein muss. Ist eine solche Abdichtung nicht vorhanden oder nur unvollständig, wird der erste Schlauch nicht exakt über den betreffenden Abschnitt einer Rohrmuffe aufgeweitet. Die erforderliche Abdichtung setzt aufwendige technische Maßnahmen voraus.

Auch die WO 95/01251 A1 beschreibt ein Verfahren zur Herstellung eines doppelwandigen thermoplastischen Rohres mit einer Rohrmuffe. Der erste Schlauch wird durch Überdruck, durch Vakuum oder durch eine Kombination von Überdruck und Vakuum in die den gewellten Abschnitt sowie den Rohrmuffenabschnitt bildenden Kokillen gedrückt, wobei während der gesamten Herstellung des doppelwandigen Rohres der zweite, innere Schlauch durch Gas mit Überdruck gegen den ersten Schlauch gedrückt wird.

Bei der Ausbildung einer Rohrmuffe wird der erste Schlauch durch Vakuum und/oder Überdruck aufgerissen, um den Druck aus dem Zwischenraum zwischen dem ersten und dem zweiten Schlauch entweichen zu lassen.

Auch die FR 2 718 509 A1 beschreibt ein Verfahren zur Herstellung eines doppelwandigen thermoplastischen Rohres mit einer Rohrmuffe. Auch hier wird das innere Rohr während des gesamten Herstellungsprozesses mit einem Gas von konstantem Überdruck beaufschlagt, während der Druck in dem Zwischenraum zwischen dem ersten und dem zweiten Rohr auf Atmosphärendruck reduziert oder sogar auf Teilvakuum abgesenkt wird, wenn die Rohrmuffe ausgebildet wird. Wenn die Rohrmuffe gebildet wird, wird der äußere Schlauch folglich durch den mit Gas unter Überdruck beaufschlagten inneren Schlauch in die Kokille gedrückt.

Der Erfindung liegt die Aufgabe zugrunde, ein Verfahren und eine Vorrichtung zur Herstellung eines doppelwandigen thermoplastischen Rohres mit einer Rohrmuffe zu schaffen, wodurch ein einwandfreies Aufweiten des ersten Schlauchs zu einer Rohrmuffe über den betreffenden Abschnitt des Formtunnels mit geringem Aufwand gewährleistet ist.

Die Aufgabe wird erfindungsgemäß durch die Merkmale des Anspruchs 1 gelöst. Dadurch, dass zu einem vorgegebenen Zeitpunkt vor oder nach dem Aufweiten des ersten Schlauchs zu einer Rohrmuffe der Raum zwischen den beiden Schläuchen mit einem über Atmosphärendruck liegenden im Wesentlichen konstanten Druck p2≤ p1 beaufschlagt wird, wird der erste Schlauch über den dafür vorgesehenen Abschnitt des Formtunnels vollständig zu einer Rohrmuffe aufgeweitet. Das Aufbringen eines Teil-Vakuums von außen auf den ersten Schlauch zur Bildung der Rohrmuffe, die einen dichten Abschluss des Raumes zwischen dem ersten Schlauch und dem Formtunnel voraussetzt, ist nicht erforderlich. Gleichwohl kann der Formtunnel in den betreffenden Abschnitten, in denen die Rohrmuffen gebildet werden, Luftabsaugkanäle aufweisen. Diese erzeugen jedoch erst dann ein effektives Teil-Vakuum an der Außenseite des ersten Schlauchs, wenn dieser über den gesamten Abschnitt der Rohrmuffe am Formtunnel anliegt.

Der Druck p2 wird erfindungsgemäß so eingestellt, dass der erste Schlauch sich in dem betreffenden Abschnitt exakt zu einer Rohrmuffe ausweitet. Ist der Druck p2 zu gering, weitet sich der erste Schlauch nicht bzw. nicht ausreichend zur Rohrmuffe auf. Ist der Druck p2 hingegen zu groß, wird der erste Schlauch beim Extrudieren gedehnt, so dass er am Anfang der Ausbildung der Rohrmuffe eine dünnere Wandstärke und am Ende der Rohrmuffe eine dickere Wandstärke aufweist. Ein zu hoher Druck kann zu einem Abreissen des ersten Schlauchs beim Aufweiten zur Rohrmuffe führen.

Der Druck p2 wird vorzugsweise also so eingestellt, dass der erste Schlauch über den zweiten Abschnitt zu einer Rohrmuffe voll aufgeweitet wird und über dem gesamten Abschnitt eine im Wesentlichen gleiche Wandstärke aufweist.

Dazu ist erfindungsgemäß vorgesehen den Druck p2 im Wesentlichen während der Ausbildung der Rohrmuffe konstant zu halten. Bei üblichen Profilen des Formtunnels in dem für die Rohrmuffe vorgesehenen Abschnitt und den üblichen Wandstärken des ersten Schlauchs ist p2 kleiner p1 zweckmäßig. Ist die Profilhöhe der Rohrmuffenausnehmung im Formtunnel klein und/oder die Wandstärke des ersten Schlauchs groß, kann p2 im Wesentlichen p1 entsprechen. Am Ende der Ausformung des ersten Schlauchs in der Rohrmuffenausnehmung kann es zweckmäßig sein, p2 größer p1 einzustellen.

Der Druck p3, mit dem der zweite Schlauch während des Extrudierens in den zur Rohrmuffe aufgeweiteten ersten Schlauch beaufschlagt und gegen den ersten Schlauch gedrückt wird, kann stufenförmig erhöht werden, so dass er zum Anheben des zweiten Schlauchs einen geringeren und anschließend einen höheren Wert aufweist. Die Änderung des Drucks p3 kann zum Beispiel in zwei Stufen oder zumindest in der Anfangsphase linear erfolgen.

Der Zeitpunkt des Umschaltens des Drucks p1 auf den Druck p2 ist vorzugsweise so gewählt, dass beim Anheben des ersten Schlauchs zur Rohrmuffe der Druck p2 im Raum zwischen den beiden Schläuchen den Sollwert erreicht hat. Stellt sich der Druck p2 sehr schnell ein, wird unmittelbar vor dem Anheben des ersten Schlauchs zu einer Rohrmuffe der Druck p1 auf den Druck p2 umgeschaltet. Stellt sich der Druck p2 erst nach einer bestimmten Zeit ein, wird entsprechend dieser Zeit der Druck vor dem Anheben des ersten Schlauchs umgeschaltet.

Das Umschalten des Drucks p1 auf den Druck p2 zu dem vorgesehenen Zeitpunkt erfolgt vorzugsweise in Abhängigkeit von der Position der Kokillen, die mit der Muffenausnehmung versehen sind, relativ zur Extrusionseinrichtung, mit der der erste Schlauch in die Wellen- bzw. Muffenform extardiert wird.

Damit der zweite Schlauch effektiv mit dem ersten Schlauch verschweißt wird, wird zu einem vorbestimmten Zeitpunkt vor dem Extrudieren des zweiten Schlauchs in dem zur Rohrmuffe aufgeweiteten ersten Schlauch der zweite Schlauch von innen mit dem Druck p3 beaufschlagt.

Der betreffende Zeitpunkt kann durch eine vorgegebene Position der Kokillen, die mit der Muffenausnehmung versehen sind, relativ zur Extrusionseinrichtung bestimmt sein.

Zur Steuerung der Drücke p1, p2 und p3 kann vorgesehen sein, dass die Einnahme einer vorgegebenen Position einer Kokille auf ihrer Bahn registriert wird und mit Hilfe dieser Registrierung die Einstellung der Drücke p1, p2 und p3 gesteuert wird. Weiterhin können Ereignisse, mit denen von den Kokillen auf der Bahn zurückgelegte Strecken bestimmbar sind, registriert werden und mit Hilfe dieser Registrierung die Einstellung der Drücke p1, p2 und p3 erfolgen.

Die erfindungsgemäße Vorrichtung zur Durchführung der vorstehend beschriebenen Verfahrensschritte sieht die Merkmale des Anspruchs 6 vor.

Die an den ersten Gaskanal angeschlossene Druckgas-Steuereinrichtung kann einen Druckregler aufweisen, mit dem der Druck des in den Raum zwischen den beiden Schläuchen strömenden Gases steuerbar ist.

Statt den Druck des in den Raum zwischen den beiden Schläuchen strömenden Gases zu steuern bzw. zu regeln, kann die Druckgas-Steuereinrichtung einen Durchflussmesser aufweisen, mit dem das in den Raum zwischen den beiden Schläuchen strömende Gasvolumen steuerbar bzw. regelbar ist.

Zur Steuerung bzw. Regelung des Drucks oder Gasvolumens kann eine Druckmesseinrichtung zur Messung des im Raum zwischen den beiden Schläuchen herrschenden Drucks vorgesehen sein.

Zur genauen Einstellung der Drücke p1 und p2 im Raum zwischen den beiden Schläuchen können Sensoren zur Messung der Temperatur des im Raum zwischen den beiden Schläuchen vorhandenen Gases und/oder des thermoplastischen Materials der Schläuche vorgesehen sein. Die Drückgas-Steuereinrichtung ist vorzugsweise so ausgelegt, dass aufgrund der Temperaturwerte der zur Erzielung der Drücke p1 und p2 benötigte Gasdruck bzw. das benötigte Gasvolumen einstellbar ist.

In einer Weiterbildung der erfindungsgemäßen Druckgas-Steuereinrichtung für die beiden Gaskanäle kann ein vorgegebenes Druckdifferential zwischen p1 und p2 einstellbar und vorzugsweise regelbar sein.

Zur Schaltung der Druckgas-Steuereinrichtungen kann an der Außenseite einer Kokille eine Marke angebracht sein und ein stationärer Sensor vorgesehen sein, mit dem die Marke in einer bestimmten Position der Kokille auf ihrer Bahn registrierbar ist. Die Steuervorrichtung ist dann mit einem Programm ausgestattet, mit dem in Abhängigkeit von der Registrierung der Marke durch den Sensor die Schaltung der Druckgas-Steuereinrichtungen erfolgt.

Insbesondere kann die Marke in einer Erhebung oder Vertiefung an der Außenseite der Kokille bestehen und als Sensor ein Näherungsschalter vorgesehen sein.

Zur Schaltung der Druckgas-Steuereinrichtungen kann ein Impulsgenerator vorgesehen sein, der Impulse erzeugt, deren Zeitdifferenz von der innerhalb dieser Zeitdifferenz von den Kokillen zurückgelegten Bahnstrecke abhängig ist. Die Impulse werden von der Steuervorrichtung registriert, die ein Programm aufweist, mit dem in Abhängigkeit von den Impulsen die Schaltung der Drucksgas-Steuereinrichtungen erfolgt.

Die Steuervorrichtung kann weiterhin so angelegt sein, dass mit ihr der durch die beiden Düsen der Extrusionseinrichtung jeweils extrudierte Strom thermoplastischen Materials und/oder die Geschwindigkeit der Kohillen auf ihrer Bahn variabel einstellbar sind.

Ausführungsbeispiele der Erfindung werden im Folgenden anhand der Zeichnung erläutert. In der Zeichnung zeigen:
- Fig.1: einen Längsschnitt durch einen Teil eines Spritzkopfes mit Formtunnel vor der Herstellung einer Rohrmuffe,
- Fig.2: einen Längsschnitt durch einen Teil des Spritzkopfes und des Formtunnels zu Beginn der Herstellung einer Rohrmuffe,
- Fig.3: einen Längsschnitt durch einen Teil des Spritzkopfes und des Formtunnels während des Extrudierens des ersten Schlauchs in die Rohrmuffenausnehmung des Formtunnels,
- Fig.4: einen Längsschnitt durch einen Teil des Spritzkopfes und des Formtunnels während des Extrudierens des zweiten Schlauchs in den zur Rohrmuffe aufgeweiteten ersten Schlauch,
- Fig.5: einen Längsschnitt durch einen Teil des Spritzkopfes und des Formtunnels während der Extrusion des zweiten Schlauchs nach. Ausformung der Rohrmuffe durch den ersten Schlauch,
- Fig.6: einen Längsschnitt durch einen Teil des Spritzkopfes und Formtunnels nach der Herstellung der Rohrmuffe,
- Fig.7: eine schematische Darstellung der Steuerung der Drücke p1, p2 und p3 und
- Fig.8: eine Ansicht der Druckgas-Steuereinrichtungen.

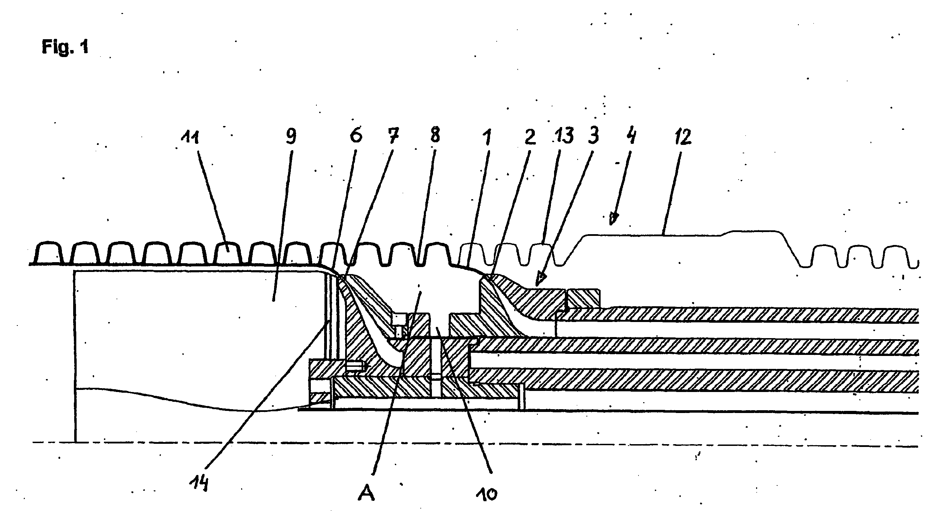

Die Figuren 1 bis 6 zeigen die wesentlichen aufeinanderfolgenden Verfahrensschritte bei der Herstellung eines doppelwandigen thermoplastischen Rohres mit einer Rohrmuffe.

Bei dem in Figur 1 dargestellten Schritt wird ein erster Schlauch 1 durch eine erste Düse 2 in einem Spritzkopf 3 in einen Formtunnel 4 extrudiert und in einem ersten Abschnitt in eine gewellte Form gebracht wird.

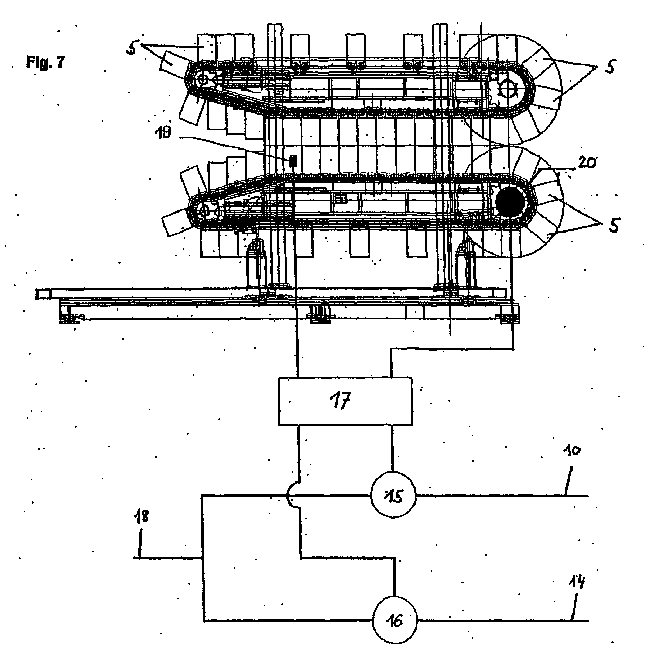

Wie aus Figur 7 hervorgeht, wird der Formtunnel 4 aus zwei Reihen sich in einem Kreislauf bewegender Halb-Kokillen 5 gebildet.

Figur 1 zeigt weiterhin, dass ein zweiter Schlauch 6 durch eine zweite Düse 7 des Spritzkopfes 3 in den ersten Schlauch extrudiert und gegen die Wellentäler 8 des ersten Schlauchs 1 gedrückt wird. In Produktionsrichtung hinter dem Spritzkopf 3 ist ein Kalibrierdorn 9 für den zweiten Schlauch 6 angeordnet, der mit einer (in der Zeichnung nicht dargestellten) Kühleinrichtung versehen sein kann.

Während der erste Schlauch 1 in die gewellte Form gebracht wird und der zweite Schlauch 6 gegen die Wellentäler 8 des ersten Schlauchs 1 gedrückt und mit diesen verschweißt wird, wird der Raum A zwischen den beiden Schläuchen 1 und 6 mit einem über Atmosphärendruck liegenden Druck p1 beaufschlagt. Der Druck wird durch ein Druckgas erzeugt, das aus einem zwischen den beiden Düsen 2 und 7 am Spritzkopf 3 angeordneten ersten Gaskanal 10 austritt.

Der Druck p1 ist so eingestellt, dass nach dem Abkühlen der beiden Schläuche 1 und 6 sich in den Zwischenräumen 11 zwischen den beiden Schläuchen Atmosphärendruck einstellt, so dass der zweite Schlauch an den Verbindungsstellen mit den Wellentälern 8 des ersten Schlauches 1 keine Auswölbungen aufweist.

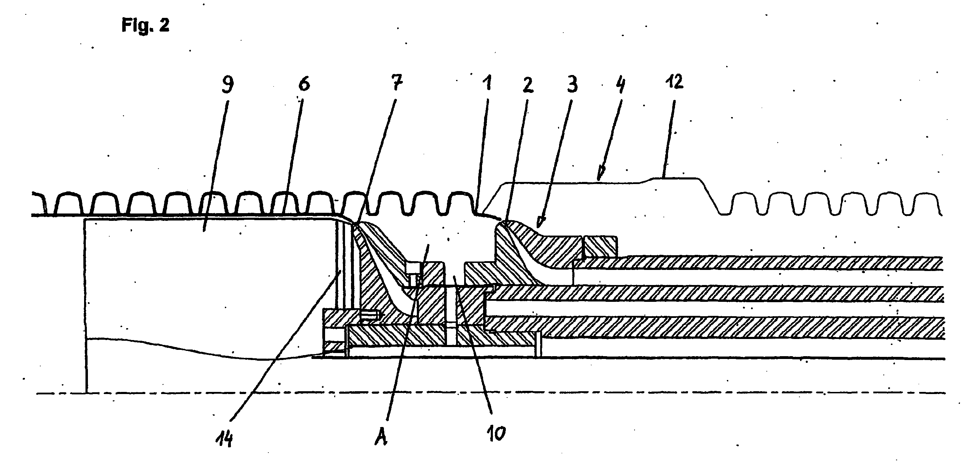

Bei dem in Figur 2 gezeigten Verfahrensschritt hat die erste Düse 2 des Spritzkopfes 3 den Beginn einer der Rohrmuffe entsprechenden Muffenausnehmung 12 im Formtunnel 4 erreicht, während die zweite Düse 7 sich noch gegenüber dem die gewellte Formwand 13 bildenden Abschnitt des Formtunnels 4 befindet. Der durch die erste Düse 2 austretende erste Schlauch 1 wird zu dem in Produktionsrichtung liegenden Ende der Muffenausnehmung 12 angehoben, indem der Druck p1 auf einen im Wesentlichen konstanten Druck p2 kleiner p1 umgeschaltet wird. Der Druck p1 im Raum A zwischen den beiden Schläuchen 1 und 6 ist derart bemessen, dass der Schlauch 1 in der darauf folgenden Ausformung zu einer Rohrmuffe vollflächig gegen die Muffenausnehmung 12 gedrückt wird und eine gleichbleibende Wandstärke über die gesamte Rohrmuffe aufweist.

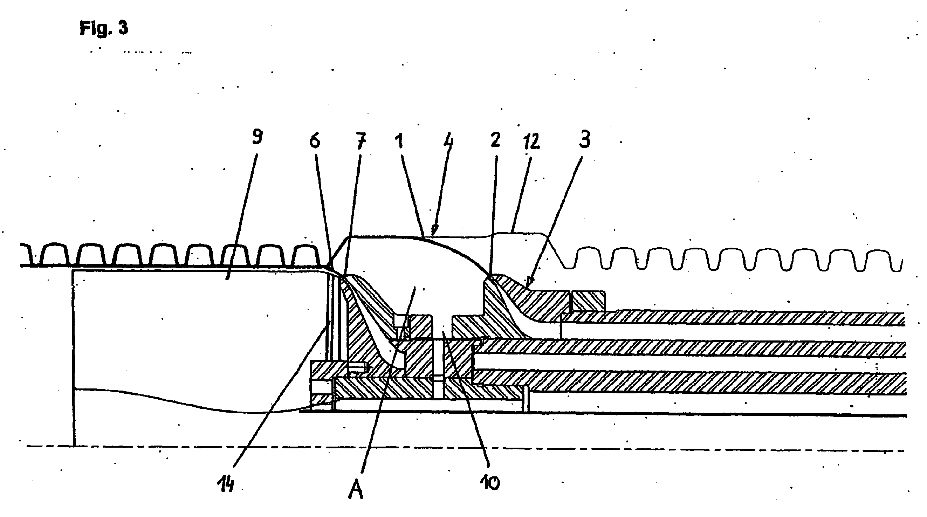

Figur 3 zeigt eine Verfahrenssituation, bei der die zweite Düse 7 des Spritzkopfes 3 den in Produktionsrichtung liegenden Anfang der Muffenausnehmung 12 des Formtunnels 4 erreicht hat, während der erste Schlauch 1 noch in die Muffenausnehmung 12 extrudiert wird. Im Raum A zwischen den beiden Schläuchen 1 und 6 wird weiterhin mit dem Druck p2 gefahren. Mit dem Druck p2 wird der erste Schlauch 1 vollflächig gegen die Muffenausnehmung 12 angedrückt. In den Kokillen der Muffenausnehmung 12 vorhandene (in der Zeichnung nicht dargestellte) Luftabsaugkanäle beaufschlagen die Außenseite des ersten Schlauchs 1 erst dann effektiv mit einem Vakuum, nachdem sich der Schlauch 1 an die Muffenausnehmung angelegt hat. In Figur 3 ist dies der vordere in Produktionsrichtung liegende Bereich. In dem Bereich, wo der durch die erste Düse 2 austretende erste Schlauch 1 zur Muffenausnehmung 12 angehoben, aber noch nicht gegen diese angelegt ist, herrscht kein für die Muffenausformung des Schlauchs 1 ausreichendes Teil-Vakuum, da durch die Luftabsaugkanäle A lediglich die in den Bereich zwischen dem ersten Schlauch 1, dem Spritzkopf 3 und dem Formtunnel 4 einströmende Luft abgesaugt wird. Die effektive Muffenformung des Schlauchs 1 geschieht also mit Hilfe des Drucks p2 im Raum A zwischen den beiden Schläuchen.

Wie aus Figur 3 hervorgeht, ist der Druck p2 so eingestellt, dass der aus der ersten Düse 2 extrudierte erste Schlauch 1 zur Muffenausnehmung 12 angehoben, jedoch nicht soweit aufgebläht wird, dass eine zu starke Dehnung erfolgt, die zu einer geringen Wandstärke des Schlauchs 1 im Anfangs- und mittleren Bereich der Muffenausnehmung 12 und einem Aufstauen des thermoplastischen Materials und somit zu einer Vergrößerung der Wandstärke an dem von der Produktionsrichtung abgewandten Ende der Muffenausnehmung 12 führt.

Um den zweiten Schlauch 6 mit dem zur Rohrmuffe aufgeweiteten ersten Schlauch 1 effektiv zu verschmelzen, wird bei der in Figur 3 dargestellten Verfahrenssituation der zweite Schlauch 6 von innen über einen zweiten Gaskanal 14 mit einem Druck p3 über Atmosphärendruck beaufschlagt. Der Druck p3 ist in einer Anfangsphase so bemessen, dass der zweite Schlauch 6 leicht in die Muffenausnehmung 12 angehoben wird, ohne das er zu stark gedehnt wird.

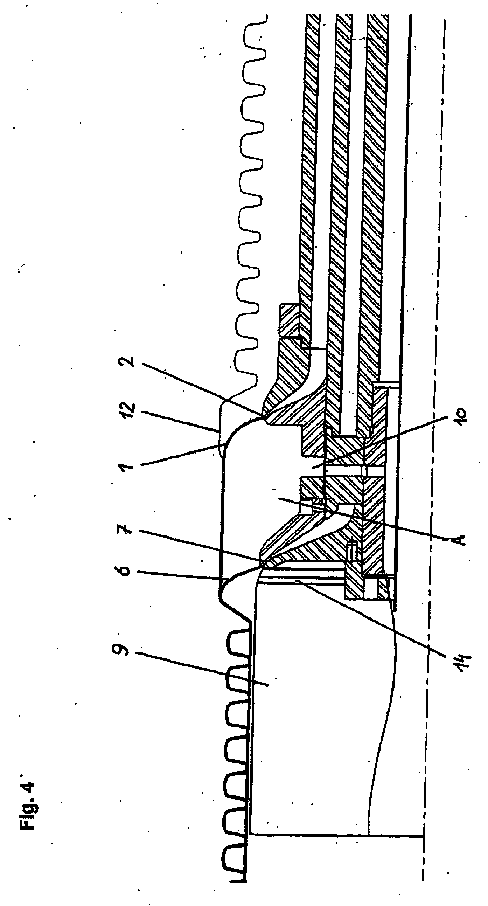

Während der in Figur 4 dargestellten weiteren Phase, in der der zweite Schlauch 6 sich zur Rohrmuffe aufgeweitet hat, wird der Druck p3 erhöht, so dass ein optimales Verschmelzen des zweiten Schlauchs 6 mit dem ersten Schlauch 1 gewährleistet ist. Der Druck p2 im Raum A zwischen den beiden Schläuchen 1 und 6 wird weiterhin im Wesentlichen konstant gehalten. Wichtig ist, dass in der in Figur 3 gezeigten Phase, in der beide Schläuche 1 und 6 zur Rohrmuffe geformt werden, die Drücke p2 und p3 so gesteuert bzw, geregelt werden, dass ein vorgegebenes Druckdifferential zwischen p2 und p3 eingehalten wird. Dadurch erfolgt eine gleichmäßig stabile Verschmelzung der beiden Schläuche 1 und 6 im Bereich der Rohrmuffe.

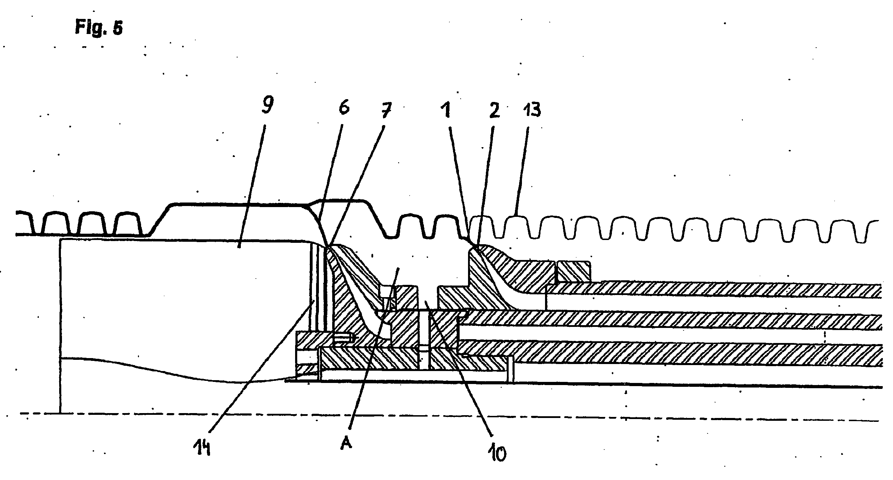

Figur 5 stellt eine nachfolgende Verfahrenssituation dar, wobei der erste Schlauch 1 wieder in einen Abschnitt mit gewellter Formwand 13 extrudiert wird, während der zweite Schlauch 6 noch zur Rohrmuffe aufgeweitet wird. Hier wird der Raum A zwischen den beiden Schläuchen 1 und 6 nach wie vor mit dem Druck p2 beaufschlagt, während der zweite Schlauch 6 von innen mit dem Druck p3 an den ersten Schlauch 1 angedrückt wird.

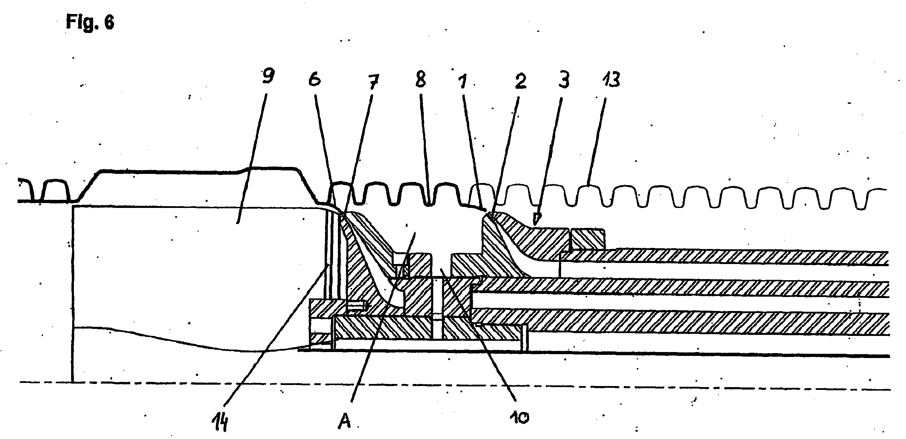

Bei der in Figur 6 gezeigten Situation ist die Ausformung der Rohrmuffe sowohl durch den ersten Schlauch 1 als auch durch den zweiten Schlauch 6 abgeschlossen. Der den zweiten Schlauch 6 von innen beaufschlagende Druck p3 wird abgeschaltet und der Raum A zwischen den beiden Schläuchen 1 und 6 wird wieder mit dem Druck p1 beaufschlagt, um einen möglichst glatten, mit den Wellentälern 8 des ersten Schlauchs 1 verschweißten zweiten Schlauch 6 nach dem Erkalten des thermoplastischen Materials zu gewinnen, wobei der zweite Schlauch 6 durch den Kalibrierdorn 9 noch weiter zu einer glatten Innenwand geformt wird. Die Druckverhältnisse werden beibehalten, bis im weiteren Verfahren ein Abschnitt, wie er in Figur 2 gezeigt wird, vorliegt.

Während der Formung der ersten Wellungen des Schlauches 1, wie in Figur 6 dargestellt, kann der Raum A zunächst mit einem höheren Druck beaufschlagt werden, um die die ersten Wellentäler der Kokillen 5 optimal mit thermoplastischem Material auszufüllen, und dann mit einem niedrigeren Druck p1 weitergearbeitet werden.

Figur 7 zeigt die Steuerung der Drücke p1, p2 und p3 durch an den ersten Gaskanal 10 und den zweiten Gaskanal 14 angeschlossene Druckgas-Steuereinrichtungen 15 bzw. 16 über eine Steuervorrichtung 17 zur zeitlichen Schaltung der Druckgas-Steuereinrichtungen 15 und 16.

Ein Druckgas zur Erzeugung der Drücke p1, p2 und p3 wird über eine Druckgas-Zuführung 18 den Druckgas-Steuereinrichtungen 15 und 16 zugeleitet. Die Druckgas-Steuereinrichtung 15 dient zur Erzeugung des Drucks p1 und des Drucks p2 durch das aus der Mündung des ersten Gaskanals 10 austretende Gas im Raum A zwischen den beiden Schläuchen 1 und 6, während die Druckgas-Steuereinrichtung 16 zur Erzeugung des den zweiten Schlauch 6 von innen beaufschlagenden Drucks p3 durch das aus der Mündung des zweiten Gaskanals 14 austretende Druckgas vorgesehen ist. Die zeitliche Schaltung der Druckgas-Steuereinrichtungen 15 und 16 erfolgt durch die Steuervorrichtung 17, wie nachstehend beschrieben wird.

Wie aus den in den Figuren 1 bis 6 dargestellten Verfahrensschritten hervorgeht, ist die zeitliche Schaltung der Drücke p1, p2 und p3 von der Position der Muffenausnehmung 12 des Formtunnels 4 relativ zum Spritzkopf 3, insbesondere zu den Düsen 2 und 7, abhängig. In einfachster Weise kann die zeitliche Schaltung durch berührlose Schalter vor und nach der Muffenausnehmung 12 erfolgen. Soll die Druckeinstellung jedoch zeitlich variabel und durch eine Regelung durchgeführt werden, ist es zweckmäßig, bei einer bestimmten Halb-Kokille 5' die Einnahme einer vorgegebenen Position innerhalb ihres Kreislaufes zu registrieren und mit Hilfe dieser Registrierung die zeitliche Einstellung der Drücke p1, p2 und p3 zu steuern.

Dazu kann an der Außenseite der Halbkokille 5' eine Marke, z.B. eine Erhöhung oder Vertiefung auf der Außenseite der Halb-Kokille, angebracht sein, wobei durch einen stationären Sensor 19, im vorliegenden Fall einen Näherungsschalter, das Erreichen der Halb-Kokille 5' in der vorgegebenen Position registrierbar ist. Die Steuervorrichtung 17 weist ein Programm auf, mit dem in Abhängigkeit von der Registrierung der Position durch den Sensor 19 die Schaltung der Druckgas-Steuereinrichtungen 15 und 16 erfolgt.

Das Programm der Steuervorrichtung 17 berücksichtigt die vorgegebene Geometrie der Kreisläufe bildenden Bahnen der Halb-Kokillen 5 und insbesondere die Position der die Muffenausnehmung 12 bildenden Halb-Kokillen. Aufgrund der Registrierung der vorgegebenen Position der Halb-Kokille 5' durch die Steuervorrichtung 17 können die Drücke p1, p2 und p3 in den vorstehend beschriebenen und insbesondere in den Figuren 2, 3 und 6 gezeigten Verfahrenssituationen eingestellt werden.

Die wiederholte Registrierung der vorgegebenen Position der Halb-Kokille 5' durch den Sensor 19 dient als Reset des Steuerungsprogramms.

Weiterhin kann ein Impulsgenerator 20 vorgesehen sein, der Impulse der Steuervorrichtung 17 zuführt, wobei die Aufeinanderfolge zweier Impulse von der Zurücklegung einer vorgegebenen Strecke der Halb-Kokillen abhängig ist. Der Impulsgenerator kann z.B. in Abhängigkeit von der Drehgeschwindigkeit oder dem Drehweg eines Zahnrades, das zur Umlenkung der sich im Kreislauf bewegenden Reihe von Halb-Kokillen 5 dient, Impulse erzeugen und an die Steuervorrichtung 17 weiterleiten. Mit Hilfe der Impulse lässt sich der Abstand der die Muffenausnehmung 12 bildenden Halb-Kokillen von den jeweiligen Schaltpositionen der. Drücke p1, p2 und p3 auf der Kokillenbahn bestimmen und die Schaltung der Drücke, wie vorstehend beschrieben, durchführen. Als Anfangssregistrierung bzw. Reset dient wiederum der Sensor 19.

Mit Hilfe des Impulsgenerators 20 kann ein Variieren der Geschwindigkeit der Halb-Kokillen 5 auf ihrer Kreislaufbahn berücksichtigt werden.

Die Steuervorrichtung 17 kann weiterhin eine Einrichtung zur Variierung der Bahngeschwindigkeit der Halb-Kokillen 5 mit einem Programm aufweisen, das die Schaltung der Drücke p1, p2 und p3 selbsttätig, d.h. ohne Registrierung von Maschinendaten, die von der Zurücklegung bestimmter Strecken der Halb-Kokillen 5 abhängig sind, steuern.

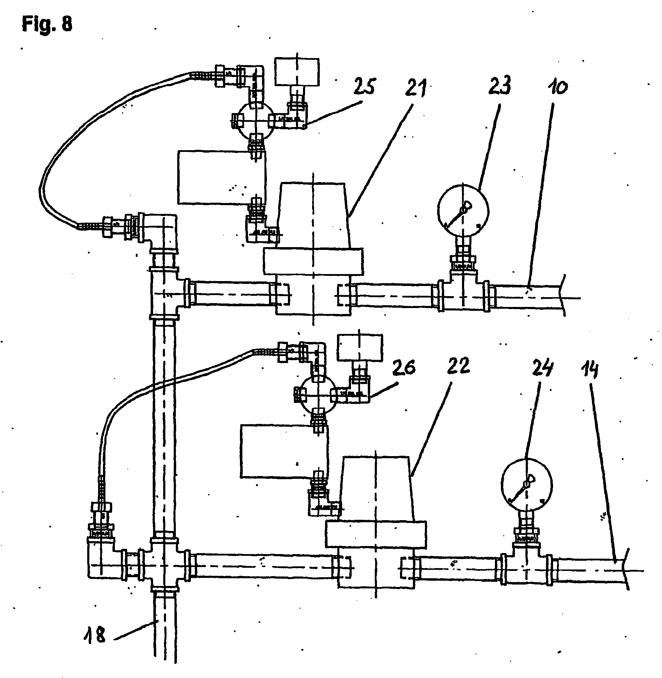

In Figur 8 ist ein Ausführungsbeispiel für die Druckgas-Steuereinrichtungen 15 und 16 zur zeitlichen Schaltung der Drücke p1 und p2 bzw. p3 dargestellt. Das zur Einstellung der Drücke p1, p2 und p3 benötigte Druckgas wird über die Druckgas-Zuführung 18 zugeleitet. Diese ist über Verzweigungen an Druckregler 21 und 22 angeschlossen. Stromabwärts hinter den Druckreglern 21 und 22 wird der aus diesen austretende Gasdruck durch Manometer 23 bzw. 24 gemessen und einer (im einzelnen in Figur 8 nicht dargestellten) Stelleinheit innerhalb der Druckregler 21 und 22 mitgeteilt. Da die Stelleinheiten, wie aus Figur 8 hervorgeht, mit Hilfe des von der Druckgas-Zuführung 18 bereitgestellten Druckgases, jedoch auf einem niedrigeren Druckwert, betrieben werden, ist ein Druckverminderer 25 bzw. 26 erforderlich, der im gezeigten Ausführungsbeispiel manuell einstellbar ist.

Weiterhin können (in der Zeichnung nicht dargestellt) Sensoren zur Messung der Temperatur des im Raum A zwischen den beiden Schläuchen vorhandenen Gases und/oder des thermoplastischen Materials der Schläuche 1 und 6 vorgesehen sein, wobei mit Hilfe der Temperaturwerte der zur Erzielung der Drücke p1 und p2 im Raum A zwischen den beiden Schläuchen benötigte Gasdruck an der Auslassseite der Druckgas-Steuereinrichtungen 15 und 16 einstellbar ist.

Die mit den Druckreglern 21 und 22 verbundene Steuervorrichtung 17 (in Figur 8 nicht dargestellt) kann ferner so ausgelegt sein, dass mit Hilfe der Druckregler 21 und 22 ein vorgegebenes Druckdifferential zwischen p2 und p3 einstellbar ist.

### Bezugszeichenliste

- 1: erster Schlauch
- 2: erste Düse
- 3: Spritzkopf
- 4: Formtunnel
- 5: Halb-Kokille
- 5': Halb-Kokille
- 6: zweiter Schlauch
- 7: zweite Düse
- 8: Wellental
- 9: Kalibrierdorn
- 10: erster Gaskanal
- 11: Zwischenraum zwischen den beiden Schläuchen
- 12: Muffenausnehmung
- 13: gewellte Formwand
- 14: zweiter Gaskanal
- 15: Druckgas-Steuereinrichtung
- 16: Druckgas-Steuereinrichtung
- 17: Steuervorrichtung
- 18: Druckgas-Zuführung
- 19: Sensor
- 20: Impulsgenerator
- 21: Druckregler
- 22: Druckregler
- 23: Manometer
- 24: Manometer
- 25: Druckverminderer
- 26: Druckverminderer

- A: Raum zwischen den beiden Schläuchen

## Patentansprüche

1. Verfahren zur Herstellung eines doppelwandigen thermoplastischen Rohres mit einer Rohrmuffe, wobei
a) ein erster Schlauch (1) in einen Formtunnel (4) extrudiert wird, der aus mindestens einer Reihe auf einer Bahn geführter Kokillen (5) gebildet wird,
b) der erste Schlauch (1) in mindestens einem ersten Abschnitt in eine gewellte Form gebracht wird und in mindestens einem zweiten Abschnitt zu einer Rohrmuffe aufgeweitet wird,
c) ein zweiter Schlauch (6) in den ersten Schlauch extrudiert und gegen die Wellentäler (8) des ersten Schlauchs (1) gedrückt wird,
d) während der erste Schlauch (1) in die gewellte Form gebracht und der zweite Schlauch (6) in den ersten extrudiert wird, der Raum (A) zwischen den beiden Schläuchen (1, 6) mit einem über atmosphärischen Druck liegenden Druck p1 beaufschlagt wird,
e) zu einem vorgebenen Zeitpunkt vor oder nach dem Beginn des Aufweiten des ersten Schlauchs (1) zu einer Rohrmuffe der Raum (A) zwischen den beiden Schläuchen (1, 6) mit einem über Atmosphärendruck liegenden im Wesentlichen konstanten Druck p2≤p1 beaufschlagt wird,
f) während des Extrudierens des zweiten Schlauchs (6) in den zur Rohrmuffe aufgeweiteten ersten Schlauch (1) der zweite Schlauch (6) von innen mit einem Druck p3 über Atmosphärendruck beaufschlagt und gegen den ersten Schlauch (1) gedrückt wird,
g) anschließend der Raum (A) zwischen den beiden Schläuchen wieder mit dem Druck p1 beaufschlagt wird.

2. Verfahren nach Anspruch 1, **dadurch gekennzeichnet, dass** unmittelbar vor dem Aufweiten des ersten Schlauchs (1) zu einer Rohrmuffe der Druck p1 auf den Druck p2 umgeschaltet wird.

3. Verfahren nach Anspruch 1 oder 2, **dadurch gekennzeichnet, dass** zu einem vorbestimmten Zeitpunkt vor dem Extrudieren des zweiten Schlauchs (6) in den zur Rohrmuffe aufgeweiteten ersten Schlauch (1) der zweite Schlauch (6) von innen mit dem Druck p3 beaufschlagt wird.

4. Verfahren nach einem der Ansprüche 1 bis 3, **dadurch gekennzeichnet, dass** die Einnahme einer vorgegebenen Position einer Kokille (5') auf ihrer Bahn registriert wird und mit Hilfe dieser Registrierung die Einstellung der Drücke p1, p2 und p3 gesteuert wird.

5. Verfahren nach Anspruch 4, **dadurch gekennzeichnet, dass** Ereignisse, mit denen die von den Kokillen (5) auf der Bahn zurückgelegte Strecke bestimmbar sind, registriert werden und mit Hilfe dieser Registrierungen die Einstellung der Drücke p1, p2 und p3 gesteuert wird.

6. Vorrichtung zur Durchführung des Verfahrens nach einem der Ansprüche 1 bis 5 mit
A) einem aus mindestens einer Reihe auf einer Bahn geführter Kokillen (5) gebildeten Formtunnel (4), der in mindestens einem ersten Abschnitt eine gewellte Formwand (13) und in mindestens einem zweiten Abschnitt eine den Rohrmuffen entsprechende Muffenausnehmung (12) aufweist,
B) einer mit einem Spritzkopf (3) versehenen Extrusionseinrichtung, wobei der Spritzkopf (3) eine erste Düse (2) zur Extrusion eines ersten Schlauchs (1) in den Formtunnel (4) und eine in Bewegungsrichtung der Kokillen (5) im Formtunnel (4) nachgeordnete zweite Düse (7) zur Extrusion eines zweiten Schlauchs (6) aufweist,
C) einem zwischen den beiden Düsen (2) und (7) angeordneten ersten Gaskanal (10), und einem in Bewegungsrichtung der Kokillen (5) des Formtunnels (4) hinter der zweiten Düse (7) ausmündenden zweiten Gaskanal (14),
E) einer an den ersten Gaskanal (10) angeschlossenen Druckgas-Steuereinrichtung (15) zur Erzeugung eines Drucks p1 und eines im Wesentlichen konstanten Drucks p2≤p1 durch das aus der Mündung des ersten Gaskanals (10) austretende Druckgas im Raum zwischen den beiden Schläuchen, (1) und (6), wobei p1 und p2 über Atmosphärendruck liegen,
F) einer an den zweiten Gaskanal (14) angeschlossenen Druckgas-Steuereinrichtung (16) zur Erzeugung eines über Atmosphärendruck liegenden Drucks p3 an der Innenseite des zweiten Schlauchs (6) durch das aus der Mündung des zweiten Gaskanals (14) austretende Druckgas,
G) einer Steuervorrichtung (17) zur Steuerung der Druckgas-Steuereinrichtungen (15) und (16).

7. Vorrichtung nach Anspruch 6, **dadurch gekennzeichnet, dass** die an den ersten Gaskanal (10) angeschlossene Druckgas-Steuereinrichtung (15) einen Druckregler (21) aufweist, mit dem der Druck des in den Raum (A) zwischen den beiden Schläuchen (1, 6) strömenden Druckgases steuerbar ist.

8. Vorrichtung nach Anspruch 6, **dadurch gekennzeichnet, dass** die an den ersten Gaskanal (10) angeschlossene Druckgassteuereinrichtung (15) einen Durchflussmesser aufweist, mit dem das in den Raum (A) zwischen den beiden Schläuchen (1, 6) strömende Gasvolumen steuerbar ist.

9. Vorrichtung nach Anspruch 7 oder 8, **dadurch gekennzeichnet, dass** eine Druckmesseinrichtung zur Messung des im Raum (A) zwischen den beiden Schläuchen (1, 6) herrschenden Drucks vorgesehen ist.

10. Vorrichtung nach einem der Ansprüche 7-9, **dadurch gekennzeichnet, dass** Sensoren zur Messung der Temperatur des im Raum (A) zwischen den beiden Schläuchen (1, 6) vorhandenen Druckgases und/oder des thermoplastischen Materials der Schläuche (1, 6) vorgesehen sind und mit der Druckgas-Steuereinrichtung (15) aufgrund der Temperaturwerte der zur Erzielung der Drücke p1 und p2 im Raum (A) zwischen den beiden Schläuchen (1, 6) benötigte Gasdruck bzw. das benötigte Gasvolumen einstellbar ist.

11. Vorrichtung nach einem der Ansprüche 6 bis 10, **dadurch gekennzeichnet, dass** mit Hilfe der Druckgas-Steuereinrichtungen (15, 16) für die beiden Gaskanäle (10 bzw. 14) ein vorgegebenes Druckdifferential zwischen p2 und p3 einstellbar ist.

12. Vorrichtung nach einem der Ansprüche 6 bis 11, **dadurch gekennzeichnet, dass** an der Außenseite einer Kokille (5') eine Marke angebracht ist und ein stationärer Sensor (19) vorgesehen ist, mit dem die Marke in einer bestimmten Position der Kokille (5') auf ihrer Bahn registrierbar ist, und dass die Steuervorrichtung (17) ein Programm aufweist, mit dem in Abhängigkeit von der Registrierung der Marke durch den Sensor (19) die Schaltung der Druckgas-Steuereinrichtungen (15, 16) erfolgt.

13. Vorrichtung nach Anspruch 12, **dadurch gekennzeichnet, dass** die Marke in einer Erhebung oder Vertiefung an der Außenseite der Kokille (5') besteht und als Sensor (19) ein Näherungsschalter vorgesehen ist.

14. Vorrichtung nach einem der Ansprüche 6-13, **dadurch gekennzeichnet, dass** ein Impulsgenerator (20) vorgesehen ist, der Impulse erzeugt, deren Aufeinanderfolge von der Zurücklegung einer vorgegebenen Strecke der Kokillen (5) auf ihrer Bahn abhängig ist und an die Steuervorrichtung (17) weiterleitet, und die Steuervorrichtung (17) ein Programm aufweist, mit dem in Abhängigkeit von den Impulsen die Schaltung der Druckgas-Steuereinrichtungen (15, 16) erfolgt.

15. Vorrichtung nach einem der Ansprüche 6 - 14, **dadurch gekennzeichnet, dass** mit der Steuervorrichtung der durch die beiden Düsen (2, 7) der Extrusionseinrichtung jeweils extrudierte Strom thermoplastischen Material, und/oder die Geschwindigkeit der Kokillen (5) auf ihrer Bahn variabel einstellbar ist.

## Claims

1. Method for manufacturing a double-walled, thermoplastic tube with a connecting sleeve, whereby
a) a first tube (1) is extruded into a mould tunnel (4) comprising at least one row of moulds (5) guided on a path,
b) the first tube (1) is given a corrugated shape in at least one first section and expanded into a connecting sleeve in at least one second section,
c) a second tube (6) is extruded into the first tube and pressed against the corrugation troughs (8) of the first tube (1),
d) while the first tube (1) is being given the corrugated shape and the second tube (6) extruded into the first, the space (A) between the two tubes (1, 6) is subjected to a pressure p1 that is above atmospheric pressure,
e) the space (A) between the two tubes (1, 6) is subjected, at a specified time before or after expansion of the first tube (1) into a connecting sleeve, to an essentially constant pressure p2 ≤ p1, lying above atmospheric pressure,
f) during extrusion of the second tube (6) into the first tube (1), which has already been expanded into a connecting sleeve, the second tube (6) is internally subjected to a pressure p3 above atmospheric pressure and pressed against the first tube (1), and
g) pressure p1 is subsequently again applied to space (A) between the two tubes.

2. Method according to Claim 1,
**characterised in that** pressure p1 is switched to pressure p2 immediately prior to expansion of the first tube (1) into a connecting sleeve.

3. Method according to Claim 1 or 2,
**characterised in that** a pressure p3 is applied to the inside of the second tube (6) at a predetermined time prior to the extrusion of the second tube (6) into the first tube (1), which first tube has already been expanded into a connecting sleeve.

4. Method according to any of Claims 1 to 3,
**characterized in that** the acquisition of a specified position of a mould (5') on its path is detected and the setting of pressures p1, p2 and p3 is controlled with the help of this detected information.

5. Method according to Claim 4,
**characterised in that** events that make it possible to determine the distance travelled by the moulds (5) on the path are detected and the setting of pressures p1, p2 and p3 is controlled with the help of this detected information.

6. Device for implementing the method according to any of Claims 1 to 5, with
A) a mould tunnel (4) that comprises at least one row of moulds (5) guided on a path, has a corrugated mould wall (13) in at least one first section and a sleeve recess (12) corresponding to the connecting sleeve in at least one second section,
B) an extruder equipped with an extrusion head (3), where the extrusion head (3) has a first die (2) for extruding a first tube (1) into the mould tunnel (4) and a second die (7) located downstream in the direction of motion of the moulds (5) in the mould tunnel (4) for extruding a second tube (6),
C) a first gas duct (10) located between the two dies (2, 7) and a second gas duct (14) opening downstream of the second die (7) in the direction of motion of the moulds (5) of the mould tunnel (4),
E) a compressed gas controller (15) connected to the first gas duct (10) for generating a pressure p1 and essentially constant pressure p2 ≤ p1, with the compressed gas flowing out of the mouth of the first gas duct (10) in the space between the two tubes (1, 6), where p1 and p2 are above atmospheric pressure,
F) a compressed gas controller (16) connected to the second gas duct (14) for generating a pressure p3, that is above atmospheric pressure, on the inside of the second tube (6), with the compressed gas flowing out of the mouth of the second gas duct (14),
G) a controller (17) for controlling the compressed gas controllers (15, 16).

7. Device according to Claim 6,
**characterised in that** the compressed gas controller (15) connected to the first gas duct (10) is equipped with a pressure controller (21) that can control the pressure of the compressed gas flowing into the space (A) between the two tubes (1, 6).

8. Device according to Claim 6,
**characterised in that** the compressed gas controller (15) connected to the first gas duct (10) has a flowmeter that controls the gas volume flowing into the space (A) between the two tubes (1, 6).

9. Device according to Claim 7 or 8,
**characterised in that** a pressure measuring device is provided to measure the pressure prevailing in the space (A) between the two tubes (1, 6).

10. Device according to any of Claims 7 to 9,
**characterized in that** sensors are provided to measure the temperature of the compressed gas in the space (A) between the two tubes (1, 6) and/or that of the thermoplastic material of the tubes (1, 6), and that the compressed gas controller (15) can be used to set the gas pressure or gas volume required to reach pressures p1 and p2 in the space (A) between the two tubes (1, 6) on the basis of the temperature values.

11. Device according to any of Claims 6 to 10,
**characterized in that** a specified pressure differential between p2 and p3 can be set for the two gas ducts (10, 14) with the help of the compressed gas controllers (15, 16).

12. Device according to any of Claims 6 to 11,
**characterized in that** a mark is made on the outside of a mould (5') and a stationary sensor (19) is provided, with which the mark can be detected at a specific position of the mould (5') on its path, and **in that** the controller (17) is equipped with a program that activates the compressed gas controllers (15, 16) based on detection of the mark by the sensor (19).

13. Device according to Claim 12,
**characterised in that** the mark consists of a projection or recess on the outside of the mould (5') and the sensor (19) is a proximity switch.

14. Device according to any of Claims 6 to 13,
**characterized in that** a pulse generator (20) is provided that generates pulses, whose succession is dependent on the moulds (5) travelling a specified distance on their path, and transmits them to the controller (17), and **in that** the controller (17) has a program that activates the compressed gas controllers (15, 16) based on the pulses.

15. Device according to any of Claims 6 to 14,
**characterized in that** the controller permits variable setting of the flow rate of thermoplastic material respectively extruded through the two dies (2, 7) of the extruder and/or the speed of the moulds (5) on their path.

## Revendications

1. Procédé de fabrication d'un tube thermoplastique à double paroi à l'aide d'un manchon de tube, sachant
a) qu'un premier tuyau flexible (1) est extrudé dans un tunnel de moulage (4), lequel est formé à partir d'au moins une série de coquilles (5) guidées sur une glissière,
b) que le premier tuyau flexible (1) est amené à prendre dans au moins un premier segment une forme ondulée et est élargi dans au moins un deuxième segment pour former un manchon de tube,
c) qu'un deuxième tuyau flexible (6) est extrudé dans le premier tuyau flexible et est pressé contre les creux d'ondulation (8) du premier tuyau flexible (1),
d) qu'alors que le premier tuyau flexible (1) est amené à prendre une forme ondulée et que le deuxième tuyau flexible (6) est extrudé dans le premier, l'espace (A) entre les deux tuyaux flexibles (1, 6) est soumis à l'action d'une pression p1 supérieure à la pression atmosphérique,
e) que l'espace (A) entre les deux tuyaux flexibles (1, 6) est soumis, à un moment prédéfini avant ou après le début de l'élargissement du premier tuyau flexible (1) pour obtenir un manchon de tube, à une pression essentiellement constante p2 ≤ p1 supérieure à la pression atmosphérique,
f) que le deuxième tuyau flexible (6) est soumis de l'intérieur à l'action d'une pression p3 supérieure à la pression atmosphérique et est pressé contre le premier tuyau flexible (1) lors de l'extrusion du deuxième tuyau flexible (6) dans le premier tuyau flexible (1) élargi pour obtenir le manchon de tube,
g) que pour finir l'espace (A) entre les deux tuyaux flexibles est soumis à nouveau à l'action de la pression p1.

2. Procédé selon la revendication 1, **caractérisé en ce que** la pression p1 est commutée sur la pression p2 directement avant l'élargissement du premier tuyau flexible (1) pour obtenir un manchon de tube.

3. Procédé selon la revendication 1 ou 2, **caractérisé en ce que** le deuxième tuyau flexible (6) est soumis de l'intérieur à l'action de la pression p3 à un moment prédéterminé avant l'extrusion du deuxième tuyau flexible (6) dans le premier tuyau flexible (1) élargi pour obtenir le manchon de tube.

4. Procédé selon l'une quelconque des revendications 1 à 3, **caractérisé en ce que** la position prédéfinie prise par une coquille (5') sur sa glissière est enregistrée, et **en ce que** le réglage des pressions p1, p2 et p3 est commandé à l'aide dudit enregistrement.

5. Procédé selon la revendication 4, **caractérisé en ce que** des événements, lesquels permettent de déterminer le trajet parcouru par les coquilles (5) sur la glissière, sont enregistrés, et **en ce que** le réglage des pressions p1, p2 et p3 est commandé à l'aide desdits enregistrements.

6. Dispositif servant à la mise en oeuvre du procédé selon l'une quelconque des revendications 1 à 5, comprenant
A) un tunnel de moulage (4) formé à partir d'au moins une rangée de coquilles (5) guidées sur une glissière, lequel tunnel de moulage présente dans au moins un premier segment une paroi de moulage (13) ondulée et dans au moins un deuxième segment un évidement de manchon (12) correspondant aux manchons de tube,
B) un système d'extrusion pourvu d'une tête d'injection (3), sachant que la tête d'injection (3) présente une première buse (2) servant à l'extrusion d'un premier tuyau flexible (1) dans le tunnel de moulage (4) et une deuxième buse (7) installée en aval dans le sens de déplacement des coquilles (5) dans le tunnel de moulage (4), servant à l'extrusion d'un deuxième tuyau flexible (6),
C) un premier canal de gaz (10) disposé entre les deux buses (2) et (7) et un deuxième canal de gaz (14) débouchant derrière la deuxième buse (7) dans le sens de déplacement des coquilles (5) du tunnel de moulage (4),
E) un système de commande du gaz comprimé (15) raccordé au premier canal de gaz (10) et servant à générer une pression p1 et une pression essentiellement constante p2 ≤ p1 par le gaz comprimé sortant de l'embout du premier canal de gaz (10) dans l'espace entre les deux tuyaux flexibles (1) et (6), sachant que p1 et p2 sont supérieures à la pression atmosphérique,
F) un système de commande du gaz comprimé (16) raccordé au deuxième canal de gaz (14), servant à générer une pression p3 supérieure à la pression atmosphérique au niveau du côté intérieur du deuxième tuyau flexible (6) par le gaz comprimé sortant de l'embout du deuxième canal de gaz (14),
G) un dispositif de commande (17) servant à commander les systèmes de commande du gaz comprimé (15) et (16).

7. Dispositif selon la revendication 6, **caractérisé en ce que** le système de commande du gaz comprimé (15) raccordé au premier canal de gaz (10) présente un système régulateur de pression (21), lequel permet de commander la pression du gaz comprimé circulant dans l'espace (A) entre les deux tuyaux flexibles (1, 6).

8. Dispositif selon la revendication 6, **caractérisé en ce que** le système de commande du gaz comprimé (15) raccordé au premier canal de gaz (10) présente un débitmètre, lequel permet de commander le volume de gaz circulant dans l'espace (A) entre les deux tuyaux flexibles (1, 6).

9. Dispositif selon la revendication 7 ou 8, **caractérisé en ce qu'**est prévu un système de mesure de la pression aux fins de la mesure de la pression régnant dans l'espace (A) entre les deux tuyaux flexibles (1, 6).

10. Dispositif selon l'une quelconque des revendications 7 à 9, **caractérisé en ce que** sont prévus des capteurs servant à mesurer la température du gaz comprimé présent dans l'espace (A) entre les deux tuyaux flexibles (1, 6) et/ou la température du matériau thermoplastique des tuyaux flexibles (1, 6), et **en ce que** la pression de gaz requise pour obtenir les pressions p1 et p2 dans l'espace (A) entre les deux tuyaux flexibles (1, 6) ou le volume de gaz requis peuvent être réglés à l'aide du système de commande du gaz comprimé (15), sur la base des valeurs de température.

11. Dispositif selon l'une quelconque des revendications 6 à 10, **caractérisé en ce qu'**un différentiel de pression prédéfini entre p2 et p3 peut être réglé à l'aide des systèmes de commande du gaz comprimé (15, 16) pour les deux canaux de gaz (10 ou 14).

12. Dispositif selon l'une quelconque des revendications 6 à 11, **caractérisé en ce qu'**une marque est pratiquée sur le côté extérieur d'une coquille (5'), et **en ce qu'**est prévu un capteur (19) stationnaire, lequel permet d'enregistrer la marque selon une certaine position de la coquille (5') sur sa glissière, et **en ce que** le dispositif de commande (17) présente un programme qui permet de commuter les systèmes de commande du gaz comprimé (15, 16) en fonction de l'enregistrement de le marque par le capteur (19).

13. Dispositif selon la revendication 12, **caractérisé en ce que** la marque consiste en un renflement ou un creux au niveau du côté extérieur de la coquille (5'), et **en ce qu'**un commutateur de proximité est prévu en tant que capteur (19).

14. Dispositif selon l'une quelconque des revendications 6 à 13, **caractérisé en ce qu'**un générateur d'impulsions (20) est prévu, lequel génère des impulsions, dont la succession dépend du trajet prédéfini parcouru par les coquilles (5) sur leur glissière, qu'il transfère au dispositif de commande (17), et **en ce que** le dispositif de commande (17) présente un programme qui permet de commuter en fonction des impulsions les systèmes de commande du gaz comprimé (15, 16).

15. Dispositif selon l'une quelconque des revendications 6 à 14, **caractérisé en ce que** le flux du matériau thermoplastique respectivement extrudé par les deux buses (2, 7) du système d'extrusion et/ou la vitesse des coquilles (5) sur leur glissière peuvent être réglés de manière variable à l'aide du dispositif de commande.
